# EUROPÄISCHE PATENTANMELDUNG

(11) **EP 1 188 600 A2**
(43) Veröffentlichungstag der Anmeldung: **20.03.2002**
(21) Anmeldenummer: 01106295.7
(22) Anmeldetag: 15.03.2001
(51) Int. Cl.: B60K 37/06

(54) **Bedieneinheit für Multi-Media-Komponenten in einem Kraftfahrzeug**

(30) Priorität: 19.03.2000 DE 10013054
(71) Anmelder: AM3 AutoMotive MultiMedia AG, 90762 Fürth (DE)
(72) Erfinder: Kurrer, Dietmar, 90469 Nürnberg (DE); Pischel, Torsten, 90522 Oberasbach (DE); Talarczyk, Thomas, 90475 Nürnberg (DE); Krätschmer, Wolfgang, 91126 Rednitzhembach (DE); Andersen, Dirk, 91459 Markt Erlbach (DE); Hallas, Ernst, Dr., 91301 Forchheim (DE); Hohmann, Wolfram, 90574 Rosstal (DE)
(74) Vertreter: Pröll, Jürgen, Dipl.-Ing. (FH)

(57) **Zusammenfassung**

Die Erfindung betrifft eine Bedieneinheit für Muitimedia-Komponenten in einem Kraftfahrzeug. Die Bedieneinheit wird am Armaturenbrett oder an der Mittelkonsole befestigt. Auf der Oberseite weist die Bedieneinheit eine Auflagefläche für eine Hand auf, welche aus einer ersten Auflagefläche und einer zweiten Auflagefläche besteht und in der ersten Auflagefläche mindestens ein erster Satz von Eingabeeinheiten und in der zweiten Auflagefläche mindestens eine zweite Eingabeeinheit angeordnet ist. Die Bedieneinheit weist außerdem auf der Unterseite eine dritte Eingabeeinheit auf.

## Beschreibung

Die Erfindung bezieht sich auf eine Bedieneinheit für Multimedia-Komponenten in einem Kraftfahrzeug. Da der vorhandene Platz im primären und sekundären Sichtbereich eines Fahrzeugführers auf die wesentlichen Komponenten des Fahrzeuges beschränkt sein sollte und den Fahrzeugführer bei der Bedienung möglichst wenig vom Verkehrsgeschehen ablenken soll, ist es zweckmäßig nur eine einzige Bedieneinheit für Multimedia-Komponeten im Fahrzeug anzuordnen. Im weiteren ist es zweckmäßig, die einzelnen Funktionen der Multimedia-Komponenten in einer einzigen Bedieneinheit zusammenzuführen.

Eine derartige Bedieneinheit für ein Kraftfahrzeug ist aus DE-A-4120975 bekannt. Bei dieser Bedieneinheit handelt es sich um eine Bedienvorrichtung für multifunktionale Anzeigevorrichtungen in einem Kraftfahrzeug. Die Bedienvorrichtung ist am Armaturenbrett oder an der Mittelkonsole befestigt und weist eine nach oben kalottenförmig gewölbte Handauflage, mit eingearbeiteten Griffmulden für die Finger auf. In den Griffmulden sind Tasten zur Bedienung der Bedienvorrichtung angeordnet. Nachteilig bei einer derartigen Anordnung ist, daß moderne Bedienkonzepte, welche beispielsweise bei einer Menüsteuerung notwendig sind, nicht funktional erfaßt werden.

Aus DE-A-19508952 ist eine Schalteinrichtung zum Betätigen mehrerer Antriebsorgane bekannt. Diese Schaltvorrichtung weist ein erstes Schaltelement oder eine Gruppe von ersten Schaltelementen, die im vorderen Bereich eines Gehäuses angeordnet sind, auf. Mit diesen Schaltelementen werden selektive Antriebsorgane betätigt. Im weiteren ist ein zweites Schaltelement angeordnet, um unter den von den ersten Schaltelementen betätigen Antriebsorganen umschalten zu können. Das erste Schaltelement und die Gruppe von weiteren Schaltelementen sind mit den Fingern einer Bedienungsperson betätigbar, während das zweite Schaltelement mit der Handfläche betätigbar ist.
Auch diese Schaltvorrichtung ist nicht für die Bedienung von Multimedia-Komponenten und zugehörigen Menüfunktionen geeignet.

Aus DE-A-4433573 ist ein Handschalthebel zum Steuern einer Vielzahl von Funktionen an einem Nutzfahrzeug bekannt. Der Handschalthebel weist einen Griffteil und einen Träger für die zur Steuerung der verschiedenen Funktionen benötigen Schaltelemente auf. Diese Schaltelemente befinden sich in Reichweite des Daumens der erfassenden Hand. Der Handschalthebel ist in seinem freien Endbereich in einen Griffteil mit einer Auflagefläche für die Hand ausgestattet, die das Abwälzen der Handfläche unterstützt und in einem vom Daumen beim Abwälzen der Handfläche auf die Auflagefläche überstrichenen Bereich beiliegenden Träger der Schaltelemente verzweigt ist.
Auch dieser Handschalthebel ist nicht ergonomisch auf die Betätigung von Menükonzepten in Multimedia-Komponenten in einem Kraftfahrzeug ausgestattet.

Aufgabe der Erfindung ist es, eine Bedieneinheit für Multimedia-Komponenten in einem Kraftfahrzeug derart zu schaffen, daß diese insbesondere an moderne Bedienkonzepte über eine Bildschirmanzeige und Bedienkonzepte von modernen Multimedia-Komponenten ergonomisch angepaßt ist und in multifunktionaler Weise verschiedene Eingabeeinheiten umfaßt.

Diese Aufgabe wird durch eine Bedieneinheit mit den Merkmalen des Anspruches 1 gelöst. Weitere vorteilhafte Ausgestaltungen der Erfindung ergeben sich anhand der abhängigen Ansprüche sowie der weiteren Beschreibung.

Die Bedieneinheit weist Auflageflächen für eine Hand auf und ist ergonomisch ausgebildet, indem die Handauflagefläche sich in zwei Teilbereiche gliedert. Bei der Handauflagefläche findet in einem Teilbereich der Handballen mit Daumen Aufnahme, in einem zweiten Teilbereich findet die restliche Hand mit den zugehörigen Fingern eine ergonomisch Aufnahme.
Im ersten Teilbereich der Handauflagefläche ist ein Bedienelement, z.B. ein Dreh-Drück-Schalter (Inkrementalgeber) oder auch ein Trackballs angeordnet. Dieses ermöglicht durch die Roll- und eine zusätzliche Drückfunktion in einer menügesteuerten Anzeigeeinheit einen Laufauswahlbalken zu bewegen und, wenn sich der Auswahlbalken auf der entsprechenden Stelle befindet durch Drücken des Bedienelemtens die Funktion auszuwählen. Im Falle eines einfachen Trackballs ist auch eine unmittelbar neben dem Trackball angeordnete Drucktaste zur Eingabebestätigung angeordnet.

Im weiteren sind auf der zweiten Handauflagefläche Tasten angeordnet, über welche verschiedenste Funktionen abrufbar sind. Diese Tasten sind frei belegbar.
Auf der Unterseite der Bedieneinheit ist eine weitere Eingabeeinheit vorgesehen, welche vorzugsweise eine alphanumerische Tastatur ist. Über diese Tastatur ist beispielsweise ein Telefon bedienbar. Zur Sicherheit ist diese Eingabeeinheit unter einer Klappe abgeordnet, welche in der Bedieneinheit formschlüssig mit der Unterseite abschließt. Ehe ein Nutzer die Eingabeeinheit bedienen und nutzen kann, muß er diese Klappe öffnen. Diese zusätzliche Eingabeeinheit kann sich auch unter einer entsprechenden Klappe direkt unter der Oberseite der Bedieneinheit im Bereich der Handballenauflage befinden. Dabei ist die Klappenverriegelung gegen unbeabsichtigtes Öffnen durch einfaches Handballenauflegen durch mechanische Rastmechanismen gesichert.

Im weiteren befindet sich an der, der ersten Handauflagefläche zugewandten, Seitenfläche weitere Funktionstasten, welche ebenfalls frei belegbar sind.

Die Bedieneinheit ist vorzugsweise im Bereich des Armaturenbrettes bzw. an der Mittelkonsole angeordnet. Die Bedieneinheit ist über eine Halteeinrichtung mit der Mittelkonsole bzw. dem Armaturenbrett verbunden. Diese Befestigungseinrichtung ist vorzugsweise an einer teleskopartigen, beweglichen Stange angeordnet. Die Bedieneinheit weist hierzu Aufnahmestellen für die Halteeinrichtung auf. Die Bedieneinheit ist an der Halteeinrichtung derart befestigt, daß die Bedieneinheit um eine Achse drehbar ist. Auf diese Weise ist es einem Nutzer möglich, die Bedieneinheit zu drehen und zwischen der Oberseite der Bedieneinheit mit Trackball und Tasten und der Unterseite mit der alphanumerischen Eingabeeinheit zu wechseln.

Die Bedieneinheit kann auch mittels einer geeigneten Schwanenhalskonsrtuktion im Bereich der Verlängerung einer Mittelarmlehne zwischen dem Schalthebel und der Mittelarmlehne angeordnet sein. Sie kann direkt am Schalthebel befestigt sein, so daß sie jede Schaltbewegung mitmacht. Hierbei wird bei einer besonders vorteilhaften Ausgestaltungsform aus der Schalthebelstellung automatisch der Betriebszustand des Kraftfahrzeuges in die Bedienung der Bedieneinheit einbezogen werden, so daß z.B. bei eingelegtem Rückwärtsgang und fahrendem Fahrzeug automatisch das Auswahlmenü für die entsprechenden Tasten entsprechend automatisch belegt wird.
Eine Schwanenhalskonstruktion zur Befestigung hat im weiteren den Vorteil, daß eine individuelle Einstellung der Position der Bedieneinheit im Bereich des Nutzers einstellbar ist.

In einer besonders vorteilhaften Ausgestaltungsform der Erfindung ist die Bedieneinheit von der Schwanenhalskonstruktion leicht abnehmbar und mit einer Pufferbatterie ausgestaltet. Im weiteren ist eine Funkschnittstelle in der Bedieneinheit integriert, so daß auch bei abgenommener Bedieneinheit diese für die Bedienung der Multimediakomponenten als Funkfernsteuerung benutzt werden kann. Die Funkschnittstelle ist als Bluetooth-Schnittstelle ausgelegt, wodurch über ein definiertes Protokoll die Kommunikation erfolgt. Auf diese Weise kann die Bedieneinheit als Fernbedienung für die hinteren Sitzreihen, z.B. für einen separaten in der/den hinteren Sitzreihe/n angeordneten Monitor verwendet werden. Dies ist besonders für Wohnmobile und/oder Kleinbusse und/oder Busse vorteilhaft, wenn in größerer Entfernung vom Fahrerplatz Einstellungen über die Bedieneinheit vorgenommen werden sollen.

In einer weiteren vorteilhaften Ausgestaltung der Erfindung weist die Bedieneinheit eine Anschlußbuchse auf, über welche die Versorgung der Bedieneinheit mit Energie über eine externe Spannungsversorgungsquelle erfolgt.

Zur besseren Anpassung an die jeweilige Hand eines Nutzers, insbesondere die Größe und Form der Hand, ist die Bedieneinheit aus Weichplastik gefertigt und läßt sich in ihrer Größe verändern. Hierzu ist in der Bedieneinheit ein Hohlraum vorgesehen, welcher aufgeblasen werden kann. Bläst man Luft in diesen Hohlraum, so wird die Bedieneinheit definiert vergrößert, durch ablassen von Luft aus dem Hohlraum, wird die Bedieneinheit verkleinert.

Weitere vorteilhafte Ausgestaltungen der Erfindung werden anhand eines konkreten Ausführungsbeispieles, anhand der Figuren F1 bis F6 näher erläutert.

Es zeigt:
- FIG 1: eine Draufsicht auf die Bedieneinheit;
- FIG 2: eine 90° Grad zu Figur 1 gedrehte Draufsicht der Bedieneinheit;
- FIG 3: eine Ansicht der Unterseite der Bedieneinheit;
- FIG 4: eine weitere Draufsicht auf die Bedieneinheit;
- FIG 5: eine seitliche Ansicht der Bedieneinheit mit Blick auf den Trackball und
- FIG 6: eine Ansicht der Bedieneinheit von vorne.

Zur besseren Verständlichkeit werden die Bezugszeichen für die jeweiligen Elemente bei allen Figuren beibehalten.

Aus FIG 1 ist eine perspektivische Draufsicht der Bedieneinheit dargestellt. Die Bedieneinheit 1 weist auf der Oberseite eine Auflagefläche 2, 3 für eine Hand auf, auf welcher die Hand eines Nutzers zu liegen kommt. Die Oberseite mit den Auflageflächen 2, 3 ist konvex ausgestaltet, wodurch in ergonomischer Weise eine Hand auf der Bedieneinheit 1 ruhen kann. In der ersten Auflagefläche 2 sind Eingabeeinheiten 4 angeordnet. Bei diesen Eingabeeinheiten 4 handelt es sich vorzugsweise um Tasten bzw. Drucksensoren. Diese Eingabeeinheiten 4 sind derart angeordnet, daß die Finger einer auf der Bedieneinheit 1 ruhenden Hand diese betätigen können, ohne daß die Hand bewegt werden muß. Die Bedieneinheiten 4 gliedern sich in jeweils 2 Tastenreihen mit jeweils 4 Tasten. Die Tastenreihen sind parallel zueinander angeordnet. Jeweils einem Finger einer Hand eines Nutzers sind jeweils eine Taste einer Tastenreihe zugeordnet. Zur exakten Anpassung der Größe der Bedieneinheit 1 an die Hand eines Nutzers ist die Bedieneinheit 1 aus einem verformbaren Material, insbesondere einem Weichplastikmaterial, hergestellt. In der Bedieneinheit 1 ist ein Hohlraum vorgesehen, in welchen Luft von außen eingeblasen werden kann. Durch das Einbringen von Luft in die Bedieneinheit 1 vergrößert sich diese und läßt sich an jede Handgröße anpassen. Zur Verkleinerung muß lediglich Luft aus dem Hohlraum abgelassen werden. In einer Ausgestaltung der Erfindung ist ein Ventil an der Bedieneinheit 1 angeordnet, vorzugsweise an der Seite zur zweiten Handauflagefläche 3.

In der Handauflagefläche 3 ist eine weitere Eingabeeinheit 5 angeordnet. Bei dieser Eingabeeinheit 5 handelt es sich vorzugsweise um eine verschieblich bzw. drehbar gelagerte Eingabeeinheit, insbesondere um einen Trackball. Durch diese Eingabeeinheit 5 ist es möglich in an sich bekannter Weise einen Eingabemittel auf einem Bildschirm einer durch die Bedieneinheit 1 gesteuerten Multimediaeinheit zu bewegen. Der Trackball ist in der Weise ausgestaltet, daß er eine Dreh-Drückfunktion aufweist. Durch drehen läßt sich folglich ein Eingabemittel auf dem Bildschirm der Multimediaeinheit verschieben, durch drücken wird die ausgewählte Position fixiert und ausgewählt.

Auf der seitlichen Fläche 6 der Bedieneinheit 1 sind weitere Eingabeeinheiten 7, 8 vorgesehen. Diese Eingabeeinheiten 7, 8 können von einem Nutzer problemlos mit dem Daumen betätigt werden. Auch bei diesen Eingabeeinheiten 7, 8 handelt es sich vorzugsweise um Tasten.

Anhand von FIG 4, welche ebenfalls eine Draufsicht auf die Bedieneinheit 1 darstellt, ist besonders gut erkennbar, daß sich die Handauflagefläche 2 und 3 der Bedieneinheit 1 durch eine Erhebung 10 voneinander abgrenzen. Diese Erhebung 10 ist in der Form ausgestaltet, daß die Handtrennlinie zwischen Daumen und restlicher Hand, eine gute Auflagefläche aufweist und zugleich ein Verrutschen der Hand verhindert. Diese Erhebung 10 unterstützt vor allem, daß bei Bewegung der Finger einer Hand und Betätigung der Eingabeinheiten 4 die Hand Halt auf der Auflagefläche 2, 3 findet. Gleiches gilt bei Betätigung der Eingabeinheiten5, 7, 8 mittels des Daumens.

Anhand von FIG 6, welche eine Ansicht der Bedieneinheit 1 von vorne zeigt, ist gut erkennbar, daß die Erhebung 10 sich über die gesamte Oberfläche der Bedieneinheit 1 erstreckt und in ergonomischer Weise die Handauflage unterstützt.

FIG 3 zeigt eine Ansicht der Unterseite der Bedieneinheit 1. Auf der Unterseite, ist eine weitere Eingabeeinheit 11, vorzugsweise eine alphanumerische Eingabeeinheit angeordnet. Diese Eingabeeinheit 11 ist mittig in der Unterseite der Bedieneinheit 1 angeordnet und unter einer Klappe 12 geschützt. Die Klappe 12 kann mittels einfacher Berührung geöffnet werden. Über die Eingabeeinheit 11 kann ein Nutzer alphanumerische Zeichen eingeben.

Im weiteren sind an der Bedieneinheit 1 Lager 9 angeordnet, über welche eine Befestigungsvorrichtung die Bedieneinheit 1 im Fahrzeug befestigt. Diese Lager 9 sind in dieser Weise ausgestaltet, daß die Bedieneinheit 1 um diese Lager 9 drehbar ist. Hierdurch ist es möglich, die Bedieneinheit 1 um eine Achse, gebildet durch die Lager 9, zu drehen und zwischen der Oberseite mit den Flächen 2 und 3 und der Unterseite mit der Eingabeeinheit 11 zu wechseln. Auf diese Weise ist es einem Nutzer möglich, zwischen verschiedenen Eingabeeinheiten 4, 5, 11 zu wechseln, ohne daß eine Verwechslung möglich wäre.

In der Bedieneinheit 11 ist ein Mikrocomputer angeordnet. Dieser Mikrocomputer überwacht sämtliche Eingabeneinheiten 4, 5, 7, 8, 11 der Bedieneinheit 1. Über eine Schnittstelleneinheit kommuniziert der Mikrocomputer mit der Multimedia-Einheit im Kraftfahrzeug. Die Übertragung der Daten von der Eingabeeinheit 1 an die Multimedia-Einheit erfolgt entweder über eine Funkübertragungsstrecke oder leitungsgebunden. Die Bedieneinheit 1 ist über eine Teleskopstange, welche am Armaturenbrett oder an der Mittelkonsole fixierbar ist, über die Lager 9 verbunden. Über diese Lager 9 wird zugleich die notwendige Versorgungsspannung in die Bedieneinheit 1 übertragen, und dienen die Lager als Kontaktstellen für die leitungsgebundene Signalübertragung zwischen Multimedia-Einheit und Bedieneinheit 1. Die Teleskopstange ist über eine zugehörige Leitung an das Bordnetz angeschlossen.

In einer weiteren Ausgestaltungsform der Erfindung ist die Bedieneinheit 1 zur Funkkommunikation mit beispielsweise einer Infrarotschnittstelle für die Schnittstelleneinheit ausgestattet. Im weiteren läßt sich jeweils ein Teil der Bedieneinheit 1 abtrennen. So kann beispielsweise die Eingabeeinheit 4, 5 oder 11 abgenommen werden. In dieser abnehmbaren Einheit 4, 5, 11 muß dann eine Mikrocomputereinheit und eine Schittstelleneinheit integriert sein, damit die Kommunikation mit der Multimedia-Einheit möglich ist. Dies hat den Vorteil, daß dieser Teil der Bedieneinheit 1 als Funkfernbedienung für die Multimedia-Einheit eingesetzt werden kann und frei verfügbar im gesamten Kraftfahrzeug benutzt werden kann. Zur Energieversorgung ist in diesem Teil eine Aufnahmeeinrichtung für eine Energieversorgungseinheit vorgesehen, insbesondere für eine Batterie oder einen Akku.

## Patentansprüche

1. Bedieneinheit (1) für Multimedia-Komponenten in einem Kraftfahrzeug, welche am Armaturenbrett oder an der Mittelkonsole befestigbar ist und auf der Oberseite eine Auflagefläche (2, 3) für eine Hand, welche aus einer ersten Auflagefläche (2) und einer zweiten Auflagefläche (3) besteht aufweist und in der ersten Auflagefläche (2) mindestens ein erster Satz von Eingabeeinheiten (4) und in der zweiten Auflagefläche (3) mindestens eine zweite Eingabeeinheit (5) angeordnet ist, wobei auf der Unterseite der Bedieneinheit (1) eine dritte Eingabeeinheit (11) angeordnet ist.

2. Bedieneinheit (1) nach Anspruch 1,
**dadurch gekennzeichnet, daß**
zur Befestigung der Bedieneinheit 1 an Mittelkonsole oder am Armaturenbrett eine Teleskopstange vorgesehen ist.

3. Bedieneinheit (1) nach Anspruch 1,
**dadurch gekennzeichnet, daß**
die zweite Eingabeeinheit (5) ein Trackball ist.

4. Bedieneinheit (1) nach Anspruch 1,
**dadurch gekennzeichnet, daß**
der erste Satz Eingabeeinheiten (4) aus Tasten und/oder Drucksensoren besteht und diese in zwei zueinander parallelen Reihen mit jeweils vier Tasten angeordnet sind.

5. Bedieneinheit (1) nach Anspruch 1,
**dadurch gekennzeichnet, daß**
die dritte Eingabeeinheit (11) eine alphanumerische Eingabeeinheit ist.

6. Bedieneinheit (1) nach einem oder mehreren der vorangegangenen Ansprüche,
**dadurch gekennzeichnet, daß**
die Oberfläche (2, 3) konvex ausgestaltet ist.

7. Bedieneinheit (1) nach einem oder mehreren der vorangegangenen Ansprüche,
**dadurch gekennzeichnet, daß**
die alphanumerische Eingabeeinheit (11) unter einer Klappe (11) angeordnet ist.

8. Bedieneinheit (1) nach einem oder mehreren der vorangegangenen Ansprüche,
**dadurch gekennzeichnet, daß**
Lagerelemente (9) angeordnet sind, in welche die Teleskopstange einfügbar ist und/oder die Bedieneinheit (1) um die Lagerelemente (9) drehbar ist, wenn diese mit der Teleskopstange verbunden sind.

9. Bedieneinheit (1) nach einem oder mehreren der vorangegangenen Ansprüche,
**dadurch gekennzeichnet, daß**
in der Bedieneinheit (1) eine Mikrocomputereinheit angeordnet ist, welche die Eingabeeinheiten (4, 5, 11) der Bedieneinheit (1) und deren Betätigung auswertet und über eine Schnittstelleneinheit mit den Multimedia-Einheiten im Kraftfahrzeug in Verbindung steht.

10. Bedieneinheit (1) nach einem oder mehreren der vorangegangenen Ansprüche,
**dadurch gekennzeichnet, daß**
die Bedieneinheit aus Weichplastik besteht und/oder die Bedieneinheit (1) einen Hohlraum aufweist, in welchen über ein Ventil Luft eingeblasen oder abgelassen werden kann und die Größe der Bedieneinheit (1) veränderbar ist.

11. Bedieneinheit (1) nach einem oder mehreren der vorangegangenen Ansprüche,
**dadurch gekennzeichnet, daß**
Teile der Bedieneinheit (1) abnehmbar sind und als Funkfernbedienung einsetzbar sind und/oder die Klappe (11) durch mechanische Rastmechanismen vor unbeabsichtigtem Öffnen gesichert ist.
